# EUROPEAN PATENT SPECIFICATION

(11) **EP 2 570 236 B1**
(45) Date of publication and mention of the grant of the patent: **19.03.2014**
(21) Application number: 11380068.4
(22) Date of filing: 15.09.2011
(51) Int. Cl.: B23Q 17/20, B23Q 17/24, G05B 19/401

(54) **Method of measuring and aligning parts for machining in a machine tool**
Verfahren zum Messen und Ausrichten der Teile zur Bearbeitung in einer Werkzeugmaschine
Procédé de mesure et d'alignement de pièces pour l'usinage dans une machine-outil

(43) Date of publication of application: 20.03.2013
(73) Proprietor: Ideko, S. Coop, 20870 Elgoibar Guipuzcoa (ES)
(72) Inventor: Zatarain Gordoa, Mikel, 20007 Donostia Gipuzkoa (ES); Mendicute Garate, Alberto, 20570 Bergara Gipuzkoa (ES); Inciarte Hidalgo, Ibai, 20600 Eibar Gipuzkoa (ES); Landaburu Lopez, Alaitz, 20600 Eibar Gipuzkoa (ES)
(74) Representative: Cabinet Plasseraud

(56) References cited:
- EP-A1- 2 244 145
- DE-A1- 4 223 483
- DE-A1-102007 027 220
- DE-C1- 19 925 462
- GB-A- 2 422 442
- US-A1- 2004 015 932
- US-A1- 2006 235 566

## Description

### Field of the Art

The present invention relates to the set-up processes of parts in a machine before machining them, proposing for that purpose a method which allows measuring a blank which is to be machined and aligning it in an optimum working position, reducing the set-up time of the blank on the machine and optimizing the ratio of material consumed during the machining.

### State of the Art

Currently in the machine tool industry one of the main problems lies in the time taken to machine parts. Thus, one of the critical times to reduce is the set-up time of the part on the machine, which in many cases is much greater than the machining time itself.

EP-2 244 145 discloses a method according to the preamble of claim 1.

The blanks arriving from prior processes, such as casting or the machine welding, have areas with surplus materials which must be machined for obtaining a finished part with the quality requirements demanded by the client. To achieve an optimum machining it is necessary to know the specific geometry of the blank which is to be machined, compare it with the geometry of the finished part to be obtained and, according to that comparison, align the blank in a suitable working position with respect to the machine tool shafts, thus assuring an optimum distribution of surplus materials for obtaining the desired finished part.

The current systems take excessive time in obtaining the geometry of the blank to be machined and, therefore, the measuring is usually performed outside of the machine to not add processing time to the machining time. The smaller sized blanks are usually measured by means of three-dimensional sensing systems which must cover the entire surface of the part point by point, and on many occasions the blank must be turned or flipped in order to scan on different faces, implying that each time the blank is moved to perform the measuring by scanning a face it is necessary to again reference the part with respect to the previous measurement. Another technique used for measuring large parts, which equally has a time problem, are laser measuring systems (laser-tracker, laser-radar), where a laser signal which is emitted from a source rebounds on the point to be measured and returns to the source, thus obtaining the three-dimensional dimensions of the measured point.

The geometry of the measured blank must be compared with the geometry of the ideal part to be obtained in order to align the blank in an optimum position with respect to the machine tool shafts. This comparison is usually performed by manual methods, in which a worker compares the dimensions measured on the blank with the dimensions of the part to be manufactured. The process is long, nonrepetitive (since the problem is different for each part), and susceptible to errors due to its manual character.

It is therefore necessary to have a method which reduces the set-up time of the part in the machine, allowing to measure and align the blank to be machined, with respect to the machine shafts, in a fast and efficient way preventing time losses and the use of manual methods which increase the cost of the finished part, and which also optimises the quantity of stripped material during the machining, as well as the number of machining operations.

### Object of the Invention

According to the present invention which is defined in claim 1, a method is proposed which allows measuring a blank and aligning it with respect to machine tool shafts, thus reducing the set-up time of the part on the machine, optimising the ratio of material consumed and assuring the existence of adequate surplus material on all the bodies or surfaces of the part to be machined.

Therefore, the method object of the invention comprises the following steps:
Step 1: Marking points on the surfaces of a blank to be machined, measuring of the three-dimensional dimensions of said points and obtaining the geometric shape of the blank.

The points are marked on the blank in step 1 by means of reference markers, which can be physical markers (coded or non-coded), natural markers, or light pattern projection markers. Said points marked on the blank are measured by means of a photogrammetric vision measuring system based on digital cameras.

In terms of reference markers, a subset of the applied markers will be duly selected in the present phase for use during a subsequent setp of aligning the part in the machine.

Step 2: Automatically obtaining geometric bodies which define the geometric shape of the ideal part based on the information available in machining paths.

As an alternative to the conventional manner of obtaining this geometry by processing the information of a CAD (Computer Aided Design) system, which would require manual intervention and would be dependent on the used CAD system itself, the information contained in the widely used standard files is used, such as the Numeric Control programme (ISO code) or files from CAM systems.

A standard file of this type contains information of the machining paths which the tooling for obtaining the geometric bodies or surfaces of the ideal part must follow. Thus, from this information the necessary parameters of the geometry of the bodies of the ideal part can be calculated automatically.

Step 3: Automatically associating the points measured on the blank and the geometric bodies of the ideal part to which they correspond.

Each point measured on the blank is related with the geometric body of the closest ideal part corresponding to it in an automatic and completely unaided manner.

Step 4: Calculating the alignment (location and orientation) of the blank with respect to the machine tool shafts for the optimum fit thereof with the geometric shape of the ideal part.

The blank is aligned mainly based on the assurance of the existence of a minimum amount of material to be machined between the points measured on the blank and the corresponding geometric bodies of the ideal part with which said points are associated.

The optimal alignment is established by determining the optimal location and orientation of the blank in machine shaft coordinates defined in the Numeric Control programme (ISO code). For that purpose, the optimal machine shaft location of the set of points marked by the reference markers is determined by means of a method using specific algorithms.

In the event that the optimization algorithms do not find a solution assuring that surplus material exists in all the areas to be machined, this would be indicative that the finished part can not be obtained from the measured blank.

Step 5: Aligning the blank by means of its location and orientation in the machine tool shafts.

Once verified that the part is machinable and it is positioned in the machine, a machine-integrated vision measuring system measures the true location of the marked points selected in step 1. Depending on the deviation between the optimal location of the points marked by the reference markers, and determined in step 4, and their true location measured with the part in the machine, the part location and turning corrections necessary for an optimal alignment of the blank in the machine shafts are determined.

Step 6: Aligning the part after turning or flipping.

In the case of machining of parts with several placings in the machine, before flipping or turning the part between placings, at least three high precision reference markers, referred to as fiducials, are positioned on the part determining its position in the machine shafts with a machine-integrated stereometric vision measuring system. Subsequently, once the part has been flipped, the new location of the reference fiducials is measured with the stereometric vision system. In terms of the deviation of the true location of the fiducials and their optimal location, the part location and turning corrections in the machine shafts necessary for an optimal alignment of the blank are determined.

A method of measuring and aligning parts, which due to its constructive and functional features, results in a preferred application for the function for which it is intended in relation with the machining of parts in machine tools, reducing the set-up time of the blank to be machined in a machine tool, is thereby obtained.

### Description of Drawings

Figure 1 shows a block diagram of the different steps making up the method object of the present invention.
Figures 2A to 2C show the main steps of the method through a two-dimensional characteristic example without the method object of the present invention losing autonomy, equally aimed at alignment processes of three-dimensional parts.
Figure 3 shows a schematic view of a first machine-integrated stereometric vision system and its operating principle for the three-dimensional measurement of the position in machine shafts of reference markers positioned on the blank.
Figure 4 shows another schematic view of a second machine-integrated stereometric vision system and its operating principle for the three-dimensional measurement of the position in machine shafts of a high precision reference marker located on a blank which has been flipped or turned.

### Detailed Description of the Invention

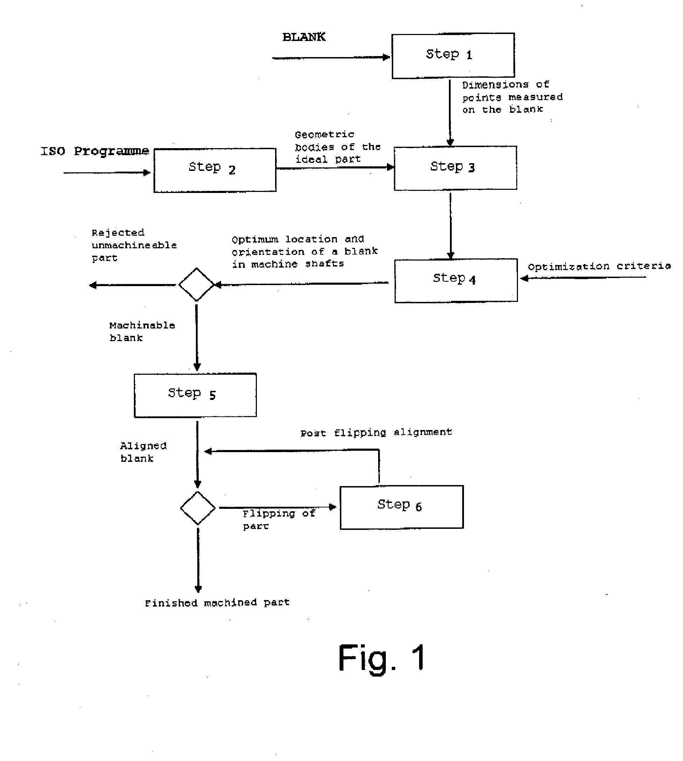

The method of measuring and aligning parts object of the present invention, depicted in Figure 1, is made up of the following steps:
Step 1: Marking points on the surfaces of a blank to be machined, measuring the three-dimensional dimensions of said points and obtaining the geometric shape of the blank.

A series of points marked on the areas of a blank to be machined is measured by vision and without contact in this step. Specifically, the blank is measured by means of a photogrammetric vision measuring system based on digital cameras which can be directly machine-integrated or located in an independent measuring station.

The points of the blank to be measured are marked on the blank itself by means of markers. The markers are elements which are arranged on the surfaces of the blank to be machined for identifying the points to measure, and the choice of their placement on the blank depends of the knowledge and experience of the worker, these markers being located specifically on the geometric bodies to be machined. These geometric bodies are three-dimensional references such as points, planes, circumferences, edges, or other characteristic geometric shapes which the machine tool must machine.

These markers can be of several types, for example physical markers, i.e., coded or non-coded labels which are placed on the geometry of the blank; natural markers, i.e., geometric elements of the blank itself, such as holes, edges, etc., which are determined on the part by means of image processing techniques; or they can even be light pattern projection markers (laser, etc.) on the part.

Additionally, in the present step 1 a subset is selected from the markers used to measure the geometry of the blank, such that they will serve as reference markers for use in a subsequent step 5 of aligning the blank in the machine.

The present step 1 is carried out in the same manufacturing plant before machining, or if convenient, in the plant of the blank supplier before the blank is sent to the manufacturing plant.

Step 2: Automatically obtaining geometric bodies which define the geometric shape of an ideal part based on the information available in machining paths found in standard files widely used in a machine tool.

The geometry of the ideal part is usually conventionally carried out by processing the information contained in a CAD (Computer Aided Design) system. This solution requires manual intervention and is dependent on the CAD system used; therefore, as an alternative the invention proposes using the information contained in standard files widely used in a machine tool, such as the Numeric Control programme (ISO code) or files from CAM (Computer Aided Manufacture) systems. This type of standard file must always be developed in order to machine the blank, such that no additional work is required and, above all, the need for manual intervention which is prone to errors is prevented. Additionally, the new proposed solution is universal, since it does not depend on the CAD system used and is based on standards widely used in a machine tool.

A standard file of this type (CNC, CAM programme etc.), contains the information of machining paths which the tools must follow for obtaining the geometric bodies of the ideal part, which geometric bodies evidently must be equal to the geometric bodies of the finished part in order to meet the quality requirements demanded. Thus, the geometric bodies or the surfaces which define the geometric shape of the ideal part can be automatically calculated from the information of machining paths without the need for the worker to carry out any data selection or interpretation, which is susceptible to human error.

Step 3: Automatically associating the points measured of the blank and the geometric bodies of the ideal part to which they correspond.

Each point measured on the blank is related with the geometric body of the closest ideal part corresponding to it in a completely automatic and unaided manner.

Therefore, in this step 3 each point measured of the blank in step 1 is associated with the geometric body (flat surface, cylindrical surface, etc.) of the corresponding ideal part obtained in step 2, i.e., each point measured on the blank is automatically associated with the closet geometric body. As association criteria, each point measured is associated with the geometric body which is located at a lesser distance.

Step 4: Calculating the alignment of the blank with respect to the machine tool shafts for the optimum fit thereof with the geometric shape of the ideal part.

The alignment of the blank is calculated mainly based on the assurance of the existence of a minimum amount of material to be machined between the points measured on the blank and the corresponding geometric bodies of the ideal part with which they are associated. The material to be machined available between a point measured of the blank and the associated geometric body of the ideal part is established depending on the distance between such point and the corresponding body.

The alignment is calculated in a completely un-aided and automatic manner. The optimal alignment is established by determining the optimal location and orientation of the blank in machine shaft coordinates. Therefore, the optimal machine shaft location of the set of points marked selected in step 1 is determined by means of a method using the following optimizing criteria:
A. Minimizing distances between the points measured on the blank and the geometric bodies of the ideal part corresponding to those points by means of minimizing the mean quadratic error of said distances.
B. Using optimization algorithms with restrictions for assuring the existence of sufficient surplus material in all the areas to be machined, i.e., assuring the existence of surplus material between all the points measured on the blank and the geometric bodies of the ideal part to which they correspond. C. Using optimization algorithms with restrictions for assuring the existence of surplus material and, simultaneously, minimizing the volume of material to remove from the blank.

In the event that the blank is machinable, the corresponding optimal machine shaft location of the subset of points marked selected in step 1 is determined as a final result of the optimizing criteria. Therefore, the optimal location of these points marked on the blank by means of the reference markers will be used in a subsequent alignment process defined in step 5.

In the event that the optimization algorithms do not find a solution assuring that surplus material exists on all the areas to be machined, this would be indicative that the ideal part cannot be obtained from the measured blank.

In the event that the blank is in the manufacturer's facilities, the instruction to not machine is given, saving the no quality cost of the aligning and machining attempt.

In the event that the blank is in the supplier's s facilities, this step allows detecting early-on that the blank is not machinable, allowing to reject it before sending it to the production plant, with the consequent additional savings in transport and logistic costs.

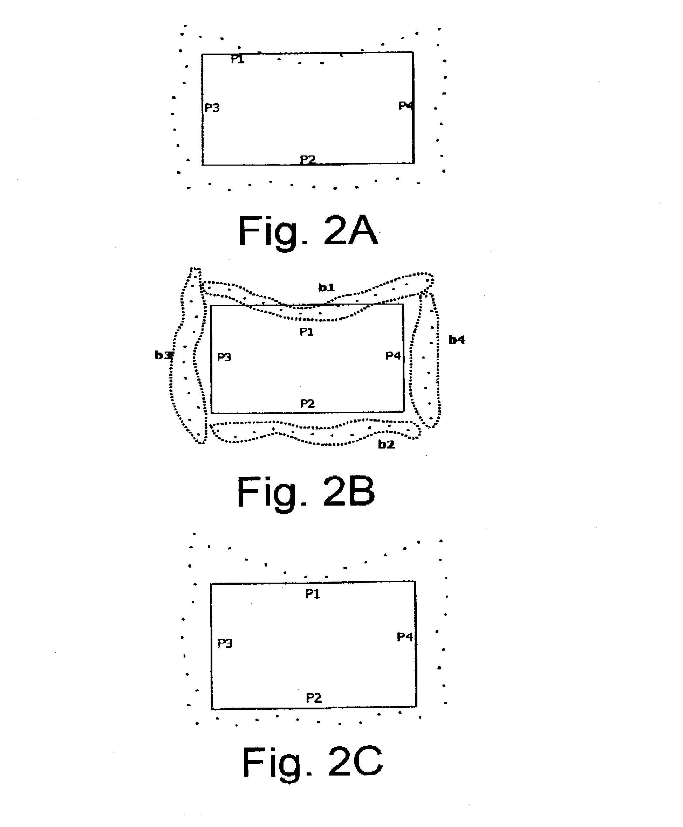

Figures 2A to 2C show a simple non-limiting example of the method defined in steps described above. In Figure 2A the points marked on the blank are represented by means of a dotted line and four flat faces defining four geometric bodies which define the geometric shape of the ideal part are represented by means of references (P1, P2, P3, P4).

The association of the points measured on the blank with the geometric bodies (P1, P2, P3, P4) to which they correspond is illustrated in Figure 2B, determining a set (b1) for the geometric body (P1), a set (b2) for the geometric body (P2), a set (b3) for the geometric body (P3) and a set (b4) for the geometric body (P4).

Figure 2C illustrates a calculation of the optimal alignment of the blank for its optimum fit with the ideal part, assuring that an adequate distribution of material to be machined exists between the points measured on the blank and the geometric bodies to which said points correspond.

Step 5: Aligning the blank in machine shafts.

Once it is verified that the blank is machinable and it is already positioned in the machine, a machine-integrated stereometric vision measuring system measures the true location of the points measured which have been marked by means of reference markers in step 1, and the optimal location of which has been determined in step 4.

The stereometric vision measuring system is integrated in the machine head and has a single camera, requiring two or more photos from different machine positions (x, y, z). The images obtained from different positions are processed with stereometric algorithms, such that the location (x, y, z) of the reference markers in machine shaft coordinates is determined.

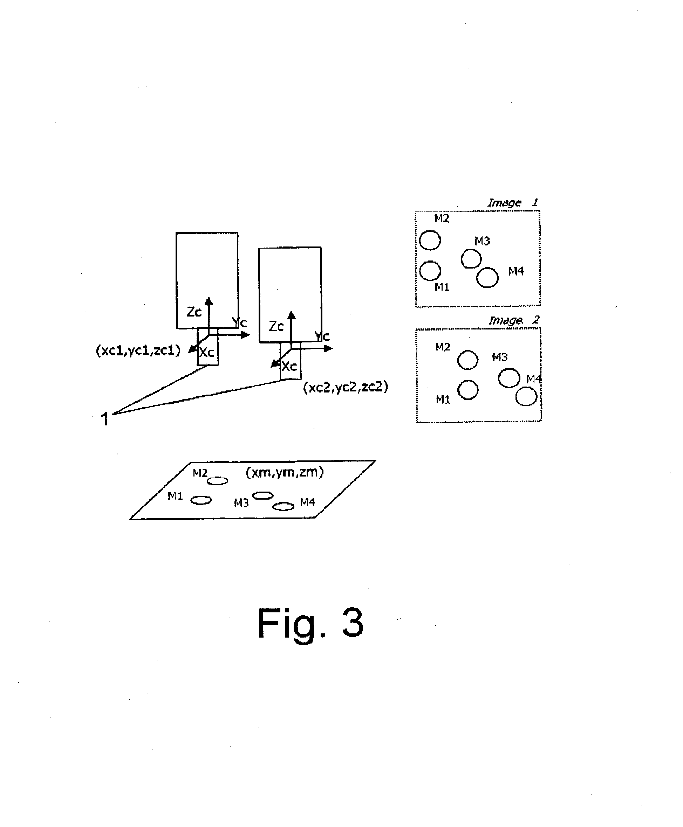

Figure 3 shows an example of the process carried out by the above vision system where a single camera (1), by means of a stereometric measuring process, determines the location in the machine of the centre of the reference markers (M1, M2, M3, M4) arranged on the blank. For that purpose, the camera (1) obtains two images (Image1, Image2) from two different camera positions, camera in position 1 (xc1, yc1, zc1) and camera in position 2 (xc2, yc2, zc2), where the references (xc, yc, zc) indicate the location of the camera (1) in the machine.

Thus, depending on the measured true location of the reference markers located on the blank, the location errors with respect to the optimal location determined in step 4, and thus the part location and orientation (turning) corrections necessary for an optimal alignment of the part in machine shafts, are determined.

According to the calculated part location and turning correction, the blank is aligned on the machine tool manually by a worker who positions it by means of a series of wedgings or similar elements. Additionally, the alignment can also be performed automatically by means of an automated system which places the blank in the optimal position for machining.

The measuring and correction process is repeated until the blank is positioned and orientated correctly in the machine, which is fulfilled when the geometry of the blank fits optimally with the geometry of the ideal part.

Step 6: Aligning the part after flipping or turning.

In the case of parts requiring several placings in the machine, after each turning or flipping of the blank between placings in order to access different faces to be machined, the corresponding alignment of the blank must be done again before its machining, fulfilling the optimization criteria established in step 4. Placings are understood as anchoring or tying the blank on the machine tool before machining one of its faces.

However, in this case, the alignment process must be of high precision given that a precise alignment of the new areas to be machined with respect to the areas machined of the tying prior to the flipping must additionally be guaranteed according to the dimensional tolerances of the involved geometric bodies of the part, thus preventing the propagation and accumulation of geometric errors between successive placings. As a result, for alignment processes of a blank after flipping, instead of the reference markers used in step 1 for the measuring the blank, new high precision reference markers, referred to as fiducials, are required.

The alignment process of a blank after flipping using high precision fiducial references is analogous to that described above for step 5. In this case, the arrangement of at least three fiducials on the part like high precision reference markers for referencing the blank in a precise manner in the machine shafts after flipping is required.

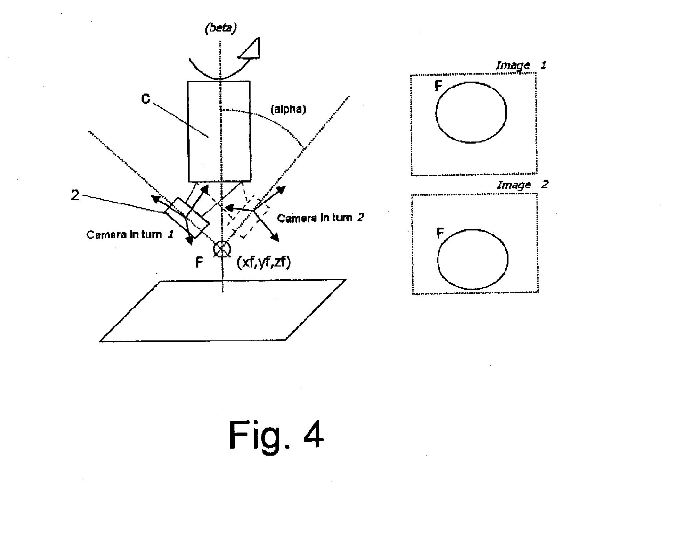

The location of the fiducials in the machine shafts is determined with an additional vision measuring system, specific for such purpose (see Figure 4). The system, integrated in the head (c) of the machine and made up of a single camera (2) tilted at an angle (alpha) with respect to the turning shaft (beta) of the head (c) requires at least two photos from different camera positions and orientations surrounding the fiducial reference (F), the location (xf, yf, zf) of which is to be determined (location of its centre), therefore taking different measurements from different machine shaft positions and/or from different turning positions of the machine head (camera in turn 1, camera in turn 2). The images obtained (Image1, Image2) are processed with stereometric algorithms such that the location (xf, yf, zf) of the centre of the fiducial (F) measured in machine shaft coordinates is determined.

The measuring process is repeated for measuring machine coordinates of the centre of each one of the fiducials located on the part. Depending on the location (xf, yf, zf) of all the fiducials placed on the part, the optimal machine shaft location required for each of the fiducials after flipping the part is determined, such that it serves as reference in the corresponding alignment process after flipping.

Subsequently, the measuring process of all the fiducials is repeated to determine their new location in machine coordinates once the part is flipped and to precisely align it. The part location and turning corrections in the machine shafts necessary for an optimal alignment of the part are determined depending on the deviation between the true location measured for the fiducials and their previously calculated optimal location.

The fiducial measuring and correction process is repeated until the part is correctly positioned in the machine, which is fulfilled when the geometry of the blank fits optimally with the geometry of the ideal part and additionally fulfills a precise relative alignment and location with respect to the machinings prior to each flipping of the part, according to the tolerances of the finished part.

The fiducials are high precision specific reference markers based on a rod which, on one hand, has a fixing element for adhering or fixing to the surface of the part when flipping and, on the other hand, finishes in a spherical shaped reflecting head, where the spherical shape allows reflecting the light striking it in a uniform manner, i.e., the three-dimensional point in space marked by said fiducial, which is the centre of the sphere, can be observed in a precise manner by the vision measuring system from different orientations and positions surrounding it.

## Claims

1. A method of measuring and aligning parts for machining in a machine tool, wherein a blank is aligned with respect to the machine tool shafts for obtaining a finished part according to the geometric shape of an ideal part, the method comprising the steps of:
Step 1: Marking points on surfaces of the blank to be machined, measuring the three-dimensional dimensions of said points and obtaining the geometric shape of the blank;
Step 2: Automatically obtaining geometric bodies which define the geometric shape of the ideal part; Step 3: Automatically associating the points measured on the blank and the geometric bodies of the ideal part to which said points correspond;
Step 4: Calculating the alignment, that is location and orientation of the blank with respect to the machine tool shafts for the optimum fit thereof with the geometric shape of the ideal part;
Step 5: Aligning the blank by means of its location and orientation in the machine tool shafts;
**characterised in that** in step 2, the geometric shape of the ideal part is determined based on the information available in machining paths,
and **in that** the alignment of the blank of step 5 is carried out by determining the true location of the points measured on the blank, and by determining the location and orientation corrections of said points measured according to the calculation carried out in step 4, wherein the true location of the points measured on the blank is done by means of a machine-integrated stereometric vision measuring system and made up of a single camera (1), which requires at least two photos of the blank from different machine positions.

2. The method of measuring and aligning parts for machining in a machine tool according to claim 1, **characterised in that** the machining paths defined in step 2 are obtained from standard files widely used in a machine tool as Numeric Control programmes like ISO code or files obtained from CAM (Computer Aided Manufacture) systems.

3. The method of measuring and aligning parts for machining in a machine tool according to claim 1, **characterised in that** the points are marked on the blank in step 1 by means of physical markers, natural markers, or light pattern projection markers.

4. The method of measuring and aligning parts for machining in a machine tool according to claim 1, **characterised in that** the points marked on the blank of step 1 are measured by means of a photogrammetric vision measuring system based on digital cameras.

5. The method of measuring and aligning parts for machining in a machine tool according to claim 1, **characterised in that** in step 3 each measured point of the blank is associated with the geometric body of the ideal part located at a lesser distance.

6. The method of measuring and aligning parts for machining in a machine tool according to claim 1, **characterised in that** the alignment of the blank with respect to the machine tool shafts, defined in step 4, is calculated by determining the optimum location in the machine shafts of the set of points marked in step 1 and taking into account the following optimizing criteria:
A. Minimizing distances between the points measured on the blank and the geometric bodies of the ideal part to which said points correspond by means of minimizing the mean quadratic error of said distances.
B. Assuring the existence of surplus material between all the points measured on the blank and the geometric bodies of the ideal part to which said points correspond.
C. Assuring the existence of surplus material and, simultaneously, minimizing the volume of material to remove from the blank.

7. The method of measuring and aligning parts for machining in a machine tool according to claim 1, **characterised in that** for blanks requiring to be flipped or turned in order to access different faces to be machined, the method has a step 6 which re-aligns the blank in the machine tool shafts after the turning or flipping, using for that purpose high precision reference markers which are arranged on the blank thereof.

8. The method of measuring and aligning parts for machining in a machine tool according to claim 7, **characterised in that** the alignment of the blank in step 6 is performed by means of a stereometric vision measuring system integrated in a head (c) of the machine tool, which is made up of a single camera (2) tilted with respect to the shaft of the head, requiring at least two photos of each high precision reference marker from different camera (2) positions.

9. The method of measuring and aligning parts for machining in a machine tool according to claims 7 and 8, **characterised in that** for referencing the blank in a precise manner in the machine shafts after a turning or flipping, the arrangement of at least three high precision reference markers on the blank is required, which markers are made up of a rod which, on one hand, has a fixing element for being fixed on the part and, on the other hand, has a spherical shaped reflecting head.

## Patentansprüche

1. Verfahren zum Ausrichten und Messen von Teilen zum Bearbeiten in einer Werkzeugmaschine, wobei ein Rohling bezüglich der Achsen der Werkzeugmaschine ausgerichtet wird, um ein fertiges Teil gemäß der geometrischen Form eines idealen Teils zu erhalten, wobei das Verfahren die Schritte umfasst:
Schritt 1: Markieren von Punkten auf zu bearbeitenden Flächen des Rohlings, Messen der dreidimensionalen Dimensionen der Punkte und Erhalten der geometrischen Form des Rohlings;
Schritt 2: Automatisches Erhalten von geometrischen Körpern, welche die geometrische Form des idealen Teils definieren;
Schritt 3: Automatisches Zuordnen der auf dem Rohling gemessenen Punkte und der geometrischen Körper des idealen Teils, welchen diese Punkte entsprechen;
Schritt 4: Berechnen der Ausrichtung, das heißt Position und Orientierung, des Rohlings bezüglich den Achsen der Werkzeugmaschine zum optimalen Anpassen davon an die geometrische Form des idealen Teils;
Schritt 5: Ausrichten des Rohlings mittels seiner Position und Orientierung in den Achsen der Werkzeugmaschine;
**dadurch gekennzeichnet, dass** in Schritt 2 die geometrische Form des idealen Teils auf Grundlage von den Informationen bestimmt wird, welche in Bearbeitungsbahnen verfügbar sind,
und dadurch, dass die Ausrichtung des Rohlings in Schritt 5 durch Bestimmen der tatsächlichen Position der an dem Rohling gemessenen Punkte durchgeführt wird, und durch Bestimmen der Positions- und Orientierungskorrekturen der Punkte, welche gemäß der in Schritt 4 durchgeführten Berechnung gemessen werden, wobei die tatsächliche Position der an dem Rohling gemessenen Punkte mittels eines in die Maschine integrierten Stereometriesicht-Messsystems erzeugt wird, und welches aus einer einzelnen Kamera (1) besteht, welche wenigstens zwei Fotos des Rohlings aus verschiedenen Maschinen-Positionen benötigt.

2. Verfahren zum Ausrichten und Messen von Teilen zum Bearbeiten in einer Werkzeugmaschine nach Anspruch 1, **dadurch gekennzeichnet, dass** die in Schritt 2 definierten Bearbeitungsbahnen aus Standard-Dateien erhalten werden, welche in einer Werkzeugmaschine häufig als Numerische Steuerprogramme eingesetzt werden, wie beispielsweise ISO-Code, oder Dateien, welche aus CAM (Computer Aided Manufacture)-Systemen erhalten werden.

3. Verfahren zum Ausrichten und Messen von Teilen zum Bearbeiten in einer Werkzeugmaschine nach Anspruch 1, **dadurch gekennzeichnet, dass** die Punkte an dem Rohling in Schritt 1 mittels physischer Markierungen, natürlicher Markierungen oder Lichtmuster-Projektionsmarkierungen markiert werden.

4. Verfahren zum Ausrichten und Messen von Teilen zum Bearbeiten in einer Werkzeugmaschine nach Anspruch 1, **dadurch gekennzeichnet, dass** die auf dem Rohling markierten Punkte aus Schritt 1 mittels eines fotogrammetrischen Messsystems auf Grundlage von Digitalkameras gemessen werden.

5. Verfahren zum Ausrichten und Messen von Teilen zum Bearbeiten in einer Werkzeugmaschine nach Anspruch 1, **dadurch gekennzeichnet, dass** in Schritt 3 jeder gemessene Punkt des Rohlings dem geometrischen Körper des idealen Teils zugeordnet wird, welcher in einem geringerem Abstand liegt.

6. Verfahren zum Ausrichten und Messen von Teilen zum Bearbeiten in einer Werkzeugmaschine nach Anspruch 1, **dadurch gekennzeichnet, dass** die Ausrichtung des Rohlings bezüglich der Achsen der Werkzeugmaschine, definiert in Schritt 4, durch Bestimmen der optimalen Position des Satzes von in Schritt 1 markierten Punkten in den Achsen der Maschine und Berücksichtigen der folgenden Optimierungskriterien berechnet wird:
A. Minimieren von Abständen zwischen den auf dem Rohling gemessenen Punkten und den geometrischen Körpern des idealen Teils, welchen die Punkte entsprechen, mittels Minimierens der mittleren quadratischen Abweichung der Abstände.
B. Sicherstellen der Existenz von überschüssigem Material zwischen allen der an dem Rohling gemessenen Punkte und der geometrischen Körper des idealen Teils, welchen die Punkte entsprechen.
C. Sicherstellen der Existenz von überschüssigem Material und gleichzeitiges Minimieren des Volumens von von dem Rohling zu entfernenden Material.

7. Verfahren zum Ausrichten und Messen von Teilen zum Bearbeiten in einer Werkzeugmaschine nach Anspruch 1, **dadurch gekennzeichnet, dass** für Rohlinge, welche gewendet oder gedreht werden müssen, um verschiedene zu bearbeitende Flächen zu erreichen, das Verfahren einen Schritt 6 aufweist, welcher den Rohling in den Achsen der Werkzeugmaschine nach dem Drehen oder Wenden neu ausrichtet, wobei zu diesem Zweck Hochpräzisions-Referenzmarkierungen verwendet werden, welche an dem Rohling davon angeordnet sind.

8. Verfahren zum Ausrichten und Messen von Teilen zum Bearbeiten in einer Werkzeugmaschine nach Anspruch 7, **dadurch gekennzeichnet, dass** das Ausrichten des Rohlings in Schritt 6 mittels eines Stereometriesicht-Messsystems ausgeführt wird, welches in einem Kopf (c) der Werkzeugmaschine integriert ist, welches aus einer einzelnen Kamera (2) besteht, welche bezüglich der Achse des Kopfs gekippt ist, wobei wenigstens zwei Fotos von jeder Hochpräzisions-Referenzmarkierung aus verschiedenen Kamera (2)-Positionen benötigt werden.

9. Verfahren zum Ausrichten und Messen von Teilen zum Bearbeiten in einer Werkzeugmaschine nach den Ansprüchen 7 und 8, **dadurch gekennzeichnet, dass** zum Referenzieren des Rohlings in einer präzisen Art und Weise in den Achsen der Maschine nach einem Drehen oder Wenden die Anordnung von wenigstens drei Hochpräzisions-Referenzmarkierungen auf dem Rohling benötigt wird, welche Markierungen aus einem Stab bestehen, welcher einerseits ein Befestigungselement zum Befestigen an dem Teil und andererseits einen kugelförmigen reflektieren Kopf aufweist.

## Revendications

1. Procédé de mesure et d'alignement de pièces pour l'usinage dans une machine-outil, dans lequel un flanc est aligné par rapport aux arbres de la machine-outil afin d'obtenir une pièce finie selon la forme géométrique d'une pièce idéale, le procédé comprenant les étapes consistant à :
étape 1 : marquer des points sur les surfaces du flanc devant être usiné, mesurer les dimensions tridimensionnelles desdits points et obtenir la forme géométrique du flanc ;
étape 2 : obtenir automatiquement des corps géométriques qui définissent la forme géométrique de la pièce idéale ; étape 3 : associer automatiquement les points mesurés sur le flanc et les corps géométriques de la pièce idéale auxquels lesdits points correspondent ;
étape 4 : calculer l'alignement, à savoir l'emplacement et l'orientation du flanc par rapport aux arbres de machine-outil pour son adaptation optimale avec la forme géométrique de la pièce idéale ;
étape 5 : aligner le flanc au moyen de son emplacement et de son orientation dans les arbres de machine-outil ;
**caractérisé en ce que** dans l'étape 2, la forme géométrique de la pièce idéale est déterminée en se basant sur les informations disponibles dans les trajectoires d'usinage,
et **en ce que** l'alignement du flanc de l'étape 5 est réalisé en déterminant l'emplacement réel des points mesurés sur le flanc, et en déterminant les corrections d'emplacement et d'orientation desdits points mesurés selon le calcul réalisé dans l'étape 4, dans lequel l'emplacement réel des points mesurés sur le flanc est réalisé au moyen d'un système de mesure de vision stéréométrique intégré à la machine et constitué d'un seul appareil photo (1), qui nécessite au moins deux photos du flanc depuis différentes positions de la machine.

2. Procédé de mesure et d'alignement de pièces pour l'usinage dans une machine-outil selon la revendication 1, **caractérisé en ce que** les trajectoires d'usinage définies dans l'étape 2 sont obtenues à partir de fichiers types largement utilisés dans une machine-outil en tant que programmes de commande numérique comme un code ISO ou de fichiers obtenus à partir de systèmes de FAO (fabrication assistée par ordinateur).

3. Procédé de mesure et d'alignement de pièces pour l'usinage dans une machine-outil selon la revendication 1, **caractérisé en ce que** les points sont marqués sur le flanc dans l'étape 1 au moyen de marqueurs physiques, de marqueurs naturels ou de marqueurs de projection de motif lumineux.

4. Procédé de mesure et d'alignement de pièces pour l'usinage dans une machine-outil selon la revendication 1, **caractérisé en ce que** les points marqués sur le flanc de l'étape 1 sont mesurés au moyen d'un système de mesure de vision photogrammétrique basé sur les appareils photo numériques.

5. Procédé de mesure et d'alignement de pièces pour l'usinage dans une machine-outil selon la revendication 1, **caractérisé en ce que** dans l'étape 3, chaque point mesuré du flanc est associé au corps géométrique de la pièce idéale située à une distance inférieure.

6. Procédé de mesure et d'alignement de pièces pour l'usinage dans une machine-outil selon la revendication 1, **caractérisé en ce que** l'alignement du flanc par rapport aux arbres de machine-outil, défini dans l'étape 4, est calculé en déterminant l'emplacement optimal dans les arbres de machine de l'ensemble de points marqués dans l'étape 1 et en prenant en compte les critères d'optimisation suivants :
A. minimiser les distances entre les points mesurés sur le flanc et les corps géométriques de la pièce idéale auxquels lesdits points correspondent au moyen de la minimisation de l'erreur quadratique moyenne desdites distances ;
B. s'assurer de l'existence d'excédent de matériau entre tous les points mesurés sur le flanc et les corps géométriques de la pièce idéale auxquels lesdits points correspondent ;
C. s'assurer de l'existence d'excédent de matériau et, simultanément, minimiser le volume de matériau à enlever du flanc.

7. Procédé de mesure et d'alignement de pièces pour l'usinage dans une machine-outil selon la revendication 1, **caractérisé en ce que** pour des flancs devant être retournés ou tournés afin d'accéder à différentes faces destinées à être usinées, le procédé comprend une étape 6 qui réaligne le flanc dans les arbres de machine-outil après la rotation ou le retournement, en utilisant dans ce but des marqueurs de référence de haute précision qui sont agencés sur les flancs de ceux-ci.

8. Procédé de mesure et d'alignement de pièces pour l'usinage dans une machine-outil selon la revendication 7, **caractérisé en ce que** l'alignement du flanc dans l'étape 6 est réalisé au moyen d'un système de mesure de vision stéréométrique intégré dans une tête (c) de la machine-outil, qui est constitué d'un seul appareil photo (2) incliné par rapport à l'arbre de la tête, nécessitant au moins deux photos de chaque marqueur de référence de haute précision depuis différentes positions d'appareil photo (2).

9. Procédé de mesure et d'alignement de pièces pour l'usinage dans une machine-outil selon les revendications 7 et 8, **caractérisé en ce qu'**afin de référencer le flanc de façon précise dans les arbres de machine après une rotation ou un retournement, l'agencement d'au moins trois marqueurs de référence de haute précision sur le flanc est nécessaire, lesquels marqueurs sont constitués d'une tige qui, d'un côté, a un élément de fixation permettant de la fixer sur la pièce et, de l'autre côté, a une tête réfléchissante de forme sphérique.
